Europäisches Patentamt

**European Patent Office**

**Office européen des brevets**

(11) Veröffentlichungsnummer: **0 035 192**
**A1**

(12) # EUROPÄISCHE PATENTANMELDUNG

(21) Anmeldenummer: **81101217.8**

(51) Int. Cl.³: **G 11 B 3/12**

(22) Anmeldetag: **20.02.81**

(30) Priorität: **28.02.80 DE 3007521**

(43) Veröffentlichungstag der Anmeldung: **09.09.81**
**Patentblatt 81/36**

(84) Benannte Vertragsstaaten: **AT BE CH DE FR GB IT LI LU NL SE**

(71) Anmelder: **Licentia Patent-Verwaltungs-GmbH, Theodor-Stern-Kai 1, D-6000 Frankfurt/Main 70 (DE)**

(72) Erfinder: **Redlich, Horst, Ing. grad., Plassstrasse 3a, D-1000 Berlin 37 (DE)**
Erfinder: **Hartmann, Werther, Ing. grad., Humperdinckstrasse 8, D-1000 Berlin 46 (DE)**

(74) Vertreter: **Einsel, Robert, Dipl.-Ing. et al, Theodor-Stern-Kai 1, D-6000 Frankfurt/Main 70 (DE)**

(54) **Abspielgerät für einen plattenförmigen Aufzeichnungsträger mit Konstanthaltung der Auflagekraft des Abtasters.**

(57) Bei einem Abspielgerät für einen scheibenförmigen Aufzeichnungsträger mit Druckabtastung ist die Güte des abgetasteten Signals von der Auflagekraft des Abtasters (7) auf dem Aufzeichnungsträger (12) abhängig. Erfindungsgemäß wird der Optimalwert der Auflagekraft durch eine Stellgröße ($U_s$) eingestellt, die aus zwei abgetasteten Signalen konstanter aber unterschiedlicher Frequenz ($f_1$ und $f_2$) gewonnen ist.

EP 0 035 192 A1

L i c e n t i a
Patent-Verwaltungs-GmbH
Theodor-Stern-Kai 1

6000   Frankfurt / Main 70


Hannover, den 12.02.1980
UE2-Wp/rs          H 80/12


**Abspielgerät für einen plattenförmigen Aufzeichnungsträger**
**mit Konstanthaltung der Auflagekraft des Abtasters**

Bei der Aufzeichnung von Bild- oder Tonsignalen entlang einer
spiralförmigen Spur eines Aufzeichnungsträgers, einer sogenannten Bild- oder Schallplatte, ist es bekannt, den Abtaster
mechanisch in der Rille zu führen. Dieses Prinzip wird z.B.
für die Aufzeichnung von Bildsignalen bei der sogenannten
Druckabtastung gemäß der DE-PS 15 74 489 angewendet.

Es ist dabei für die Dichtspeichertechnik auch bekannt (DE-
PS 20 29 909), den eigentlichen Abtaster über einen federnden
Tragarm an dem Abtastergehäuse zu lagern, das seinerseits
durch einen Schlitten beim Abspielvorgang radial zur Platte
bewegt wird. Diese federnde Aufhängung des Abtasters an dem
Abtastergehäuse gestattet, daß die Rille der Platte eine Feinführung des Abtasters übernimmt und somit der Abtaster auch
bei einer geringen Exzentrizität der Aufzeichnungsspur durch
die Rille mitgenommen wird.

Unabhängig von der beschriebenen mechanischen Führung des Abtasters innerhalb der Rille kann die eigentliche Abtastung auf verschiedene Weise erfolgen, z.B. mechanisch, kapazitiv
oder optisch.

Bei derartigen Abspielgeräten ist die Güte des vom Signalwandler gelieferten Signales bei der Wiedergabe von der Auflagekraft des Abtasters auf der Platte abhängig. Besonders
bei der mechanischen oder kapazitiven Abtastung ist die Wiedergabe nur bei einer bestimmten Auflagekraft oder nur in
einem bestimmten Bereich dieser Kraft optimal. Wenn z.B. bei
der Druckabtastung die Auflagekraft vom Optimalwert aus abnimmt, so sinkt die Amplitude des gewonnenen Signals schnell
ab, bis schließlich der Wandler überhaupt kein Signal mehr
liefert. Wenn andererseits die Auflagekraft vom Optimalwert
aus ansteigt, sinkt ebenfalls die Amplitude des gewonnenen
Signals, während außerdem der Störabstand kleiner und die
Abnutzung von Platte und Abtaster größer wird.

An sich läßt sich bei einem Abspielgerät der beschriebenen
Art die Auflagekraft durch die Höhenlage des Abtastergehäuses
relativ zur Platte und damit durch die erfolgte Auslenkung
des federnden Tragarmes auf den Optimalwert einstellen. Dieser
Optimalwert bleibt aber während des Abspielvorganges nicht
immer erhalten. Das läßt sich dadurch erklären, daß derartige
Bild- oder Schallplatten im allgemeinen nicht völlig eben,
sondern mehr oder weniger gewölbt sind. Dadurch kann sich
die Auflagekraft während eines Abspielvorganges vom Außenrand zum Innenrand der Aufzeichnungsfläche im unerwünschten
Maße ändern. Diese Höhenänderung der beim Abspielvorgang rotierenden Platte ist besonders gravierend bei einer starren
Platte.

Zur Konstanthaltung der Auflagekraft ist es bekannt (DE-OS
20 55 204), die Abtasteinrichtung mit einem Druckmeßgerät zu
versehen, dessen Ausgang mit einem Soll-Ist-Vergleichsglied
verbunden ist. Der Ausgang dieses Vergleichsgliedes ist mit einem Stellglied verbunden, das den Tragarm des Abtasters im
Sinne der Konstanthaltung der Auflagekraft steuert. Diese Lösung ist jedoch in der Praxis schwer realisierbar, zumal der
Tragarm ein außerordentlich kleines und empfindliches Bauteil
ist.

Der Erfindung liegt die Aufgabe zugrunde, die Auflagekraft
konstant zu halten, ohne daß am Abtaster besondere Mittel
zur Feststellung der tatsächlichen Auflagekraft notwendig
sind.

Diese Aufgabe wird durch die im Anspruch 1 beschriebene Erfindung gelöst. Vorteilhafte Weiterbildungen der Erfindung sind
in den Unteransprüchen beschrieben.

Die Erfindung beruht auf folgender Erkenntnis. Die Amplitude
des abgetasteten Signals ist von der Auflagekraft abhängig und
hat bei einer bestimmten Auflagekraft ein Maximum. Die Auflagekraft bei diesem Maximum kann man als Optimalwert für die Auflagekraft bezeichnen. Unterhalb dieses Wertes nimmt die Amplitude des Signales schnell ab. Oberhalb des Wertes nimmt die
Amplitude ebenfalls ab, während zusätzlich die Abnutzung des
Abtasters und des Aufzeichnungsträgers zunehmen und schließlich eine Zerstörung des Aufzeichnungsträgers auftritt. Es
hat sich nun gezeigt, daß die Lage des Maximums von der Frequenz des aufgezeichneten Signals, d.h. von der geometrischen
Wellenlänge dieses Signals auf dem Aufzeichnungsträger, abhängig ist, und zwar verschiebt sich mit größer werdender
Wellenlänge das Maximum zu größeren Auflagekräften. Wenn jetzt
zwei Signale unterschiedlicher Frequenz aufgezeichnet sind,
so läßt sich in den Kennlinien, die die Abhängigkeit der Amplitude des abgetasteten Spannung von der Auflagekraft darstellen,
ein Schnittpunkt erreichen. Unterhalb dieses Schnittpunktes
ist die Amplitude des abgetasteten Signales bei der kleinen
Wellenlänge größer als bei der großen Wellenlänge, während oberhalb des Schnittpunktes die Amplitude für die große Wellenlänge größer ist als für die kleine Wellanlänge. Das bedeutet,
daß die Differenz der Amplituden der abgetasteten Signale unterschiedlicher Frequenz bei Abweichung von dem Schnittpunkt
mit unterschiedlicher Polarität zunimmt. Das wiederum bedeutet, daß eine die Abweichung von dem Schnittpunkt der beiden
Kennlinien nach Betrag und Richtung gewonnene Stellgröße aus
dem Signal selbst abgeleitet werden kann. Diese Stellgröße
kann dazu dienen, die Auflagekraft entsprechend der wirksamen
Regelverstärkung annähernd auf den Schnittpunkt einzuregeln.
Die diesem Schnittpunkt zugeordnete Auflagekraft ist dann die
optimale Auflagekraft, die durch das Signal selbst eingestellt
werden kann. Vorzugsweise wird das Amplitudenverhältnis der
beiden abgetasteten Signale so gewählt, daß der Schnittpunkt
bei dem Maximum der Kennlinie für die kleinere Wellenlänge
liegt. Die Regelung der Auflagekraft auf den Schnittpunkt hat
den Vorteil, daß die Amplituden der beiden abgetasteten Signale für die beiden Frequenzen gleich sind. Wesentlich ist
also, daß die Stellgröße zur Einstellung der optimalen Auflagekraft aus dem aufgezeichneten Signal selbst gewonnen wird
und bisher benötigte Meßeinrichtungen zur Feststellung der
tatsächlichen Auflagekraft, z.B. Meßmittel zur Ermittlung
der Auslenkung des Tragarmes für den Abtaster, nicht mehr
benötigt werden.

Die Erfindung wird anhand der Zeichnung an einem Ausführungsbeispiel erläutert. Darin zeigen
Figur 1 den Verlauf der genannten Kennlinien,
Figur 2 ein Ausführungsbeispiel der Erfindung,
Figur 3,4 zwei verschiedene Auswertschaltungen für das abgetastete Signal,
Figur 5 den Verlauf der zur Einstellung der Auflagekraft
dienenden Stellgröße und
Figur 6 ein weiteres Ausführungsbeispiel der Erfindung.

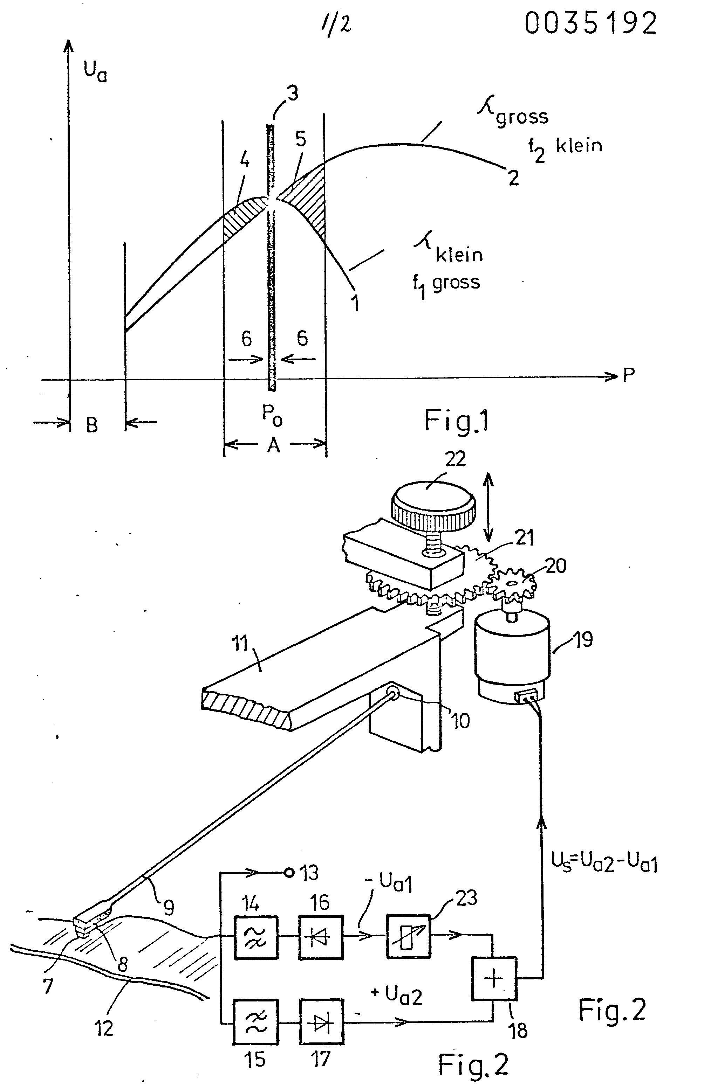

Figur 1 zeigt die Abhängigkeit der Amplitude der abgetasteten
Spannung $U_a$ in Abhängigkeit von der Auflagekraft P des Abtasters auf dem Aufzeichnungsträger. Die Kennlinie 1 gilt für
eine kleine Wellenlänge $\lambda_{klein}$, also eine große Frequenz
$f_1$. Die Kennlinie 2 gilt für eine große Wellenlänge $\lambda_{groß}$,
d.h. eine kleine Frequenz $f_2$. Es ist ersichtlich, daß die
beiden Kennlinien 1,2 bei der Auflagekraft $P_0$ einen Schnittpunkt bilden, wobei $P_0$ die für die beiden dargestellten Frequenzen optimale Auflagekraft ist. Diese Stelle der Auflagekraft ist durch den senkrechten Strich 3 bezeichnet. Bei
dieser Auflagekraft $P_0$ sind einerseits die Amplituden der
abgetasteten Signale mit den Frequenzen $f_1$ und $f_2$ einander
gleich, während außerdem die Amplitude für das Signal mit
der Frequenz $f_1$ beim Maximum der Kennlinie liegt.

Die Ausgangsspannung für die Kennlinie 1 wird mit $U_{a1}$ und
die Ausgangsspannung für die Kennlinie mit $U_{a2}$ bezeichnet.
Dann gilt für den Bereich 4 unterhalb der optimalen Auflagekraft $P_0$:

$$U_{a1} > U_{a2}.$$

In dem Bereich 5 oberhalb der optimalen Auflagekraft $P_0$ gilt
indessen:

$$U_{a1} < U_{a2}.$$

Bei der optimalen Auflagekraft $P_0$ ist $U_{a1} = U_{a2}$. Am linken
Ende des Bereiches 4 ist die Auflagekraft, wie ersichtlich,
zu klein und am rechten Ende des Bereiches 5 zu groß. Aus
den beiden Spannungen $U_{a1}$ und $U_{a2}$ wird jetzt, wie noch näher
erläutert, eine Stellgröße $U_s$ gewonnen, die die Auflagekraft
in Richtung der dargestellten Pfeile 6 selbsttätig auf den
Optimalwert $P_0$ regelt. Der dabei auftretende Arbeitsbereich
ist mit A bezeichnet. In dem Bereich B ist die Auflagekraft so klein, daß keine brauchbare Abtastung vorliegt, weil insbesondere der Abtaster nicht in ständigem Kontakt mit dem Aufzeichnungsträger steht.

Figur 2 zeigt ein Ausführungsbeispiel, bei dem die Auflagekraft durch die genannte Stellgröße $U_s$ mit einem Elektromotor auf den Optimalwert $P_0$ geregelt wird. Der Abtaster 7 ist über den Signalwandler 8 mit dem Ende des federnden Röhrchens 9 verbunden, das in dem Punkt 10 gelenkig an dem Abtastergehäuse 11 gelagert ist. Das Gehäuse 11 wird beim Abtastvorgang durch nicht näher dargestellte Mittel radial zum Aufzeichnungsträger bewegt. Dieses ist näher beschrieben in der DE-PS 20 29 909. Der Abtaster 7 liegt mit einer durch die Auslenkung des federnden Röhrchens 9 bestimmten Auflagekraft P auf dem Aufzeichnungsträger 12 auf und liefert bei der Abtastung an der Klemme 13 das Nutzsignal, das einer Wiedergabeeinrichtung zugeführt wird.

Das vom Abtaster 7 gelieferte Signal an der Klemme 13 enthält u.a. die in Figur 1 beschriebenen Signale mit den Frequenzen $f_1$ und $f_2$. Solche Signale können z.B. in einem digitalen binären PCM-Tonsignal enthalten sein, wie es in der älteren Anmeldung P 29 22 082 beschrieben ist. Aus dem abgetasteten Signal wird mit dem Hochpaß 14 das Signal mit der größeren Frequenz $f_1$ und mit dem Tiefpaß 15 das Signal mit der kleineren Frequenz $f_2$ frequenzselektiv getrennt gewonnen und anschließend in Amplitudenmodulatoren 16,17 gleichgerichtet. Die dadurch gewonnenen Signale werden in der Addierstufe 18 subtrahiert, wie durch die unterschiedliche Polung der Dioden in den Gleichrichtern 16,17 angedeutet ist. Dadurch entsteht am Ausgang der Addierstufe 18 eine Stellgröße

$$U_s = U_{a2} - U_{a1}.$$

Es ist ersichtlich, daß diese Stellgröße mit wachsender Abbleibt durch diese gegensätzliche Einwirkung der Bimetallstreifen auf das Teil 32 die Höhenlage des Teiles 32 relativ
zum Aufzeichnungsträger 12 und damit die Auflagekraft konstant.

Die Regelung erfolgt folgendermaßen. Bei optimaler Auflagekraft $P_0$ ist $U_{a1} = U_{a2}$, so daß die Wirkungen dieser Spannung
auf die Bimetallstreifen einander aufheben und die Höhenlage
des Teiles 32 in erwünschter Weise unbeeinflußt bleibt. Wenn
jetzt die Auflagekraft P abweichend vom Optimalwert $P_0$ kleiner wird, wird gemäß Figur 1 die Spannung $U_{a1}$ kleiner, so daß
die Wirkung dieser Spannung im Sinne einer Auslenkung in
Richtung 35 ebenfalls kleiner wird. Außerdem wird die Spannung $U_{a2}$ gemäß Figur 1 größer, so daß ihre Wirkung auf die
Auslenkung des Bimetallstreifens 34 in Richtung 36 größer
wird. Durch diese Gegentaktsteuerung wird also das Teil 32
nach unten abgesenkt. Das Röhrchen 9 wird weiter ausgelenkt
und somit im Rahmen der wirksamen Regelsteilheit die Auflagekraft P wieder auf den Optimalwert $P_0$ zurückgeregelt. Dann
ist wieder annähernd $U_{a1} = U_{a2}$. Bei Abweichung der Auflagekraft zu höheren Werten indessen ändern sich die Spannungen
$U_{a1}$ und $U_{a2}$ in entgegengesetzten Richtungen, so daß nunmehr
das Teil 32 angehoben und die Auflagekraft wieder in Richtung des Optimalwertes $P_0$ verkleinert wird.

Die gewonnene Regelspannung braucht nicht auf den den Abtaster 7 tragenden Schlitten einzuwirken. Sie kann auch direkt auf den Abtaster 7 einwirken.

Die Signale brauchen nicht ständig vorhanden zu sein. Die Gleichrichter 16,17 können eine solche Zeitkonstante haben, oder es können zusätzliche Siebglieder vorgesehen sein, die die gleichgerichteten Spannungen $U_a$ in den Signalpausen aufrechterhalten.

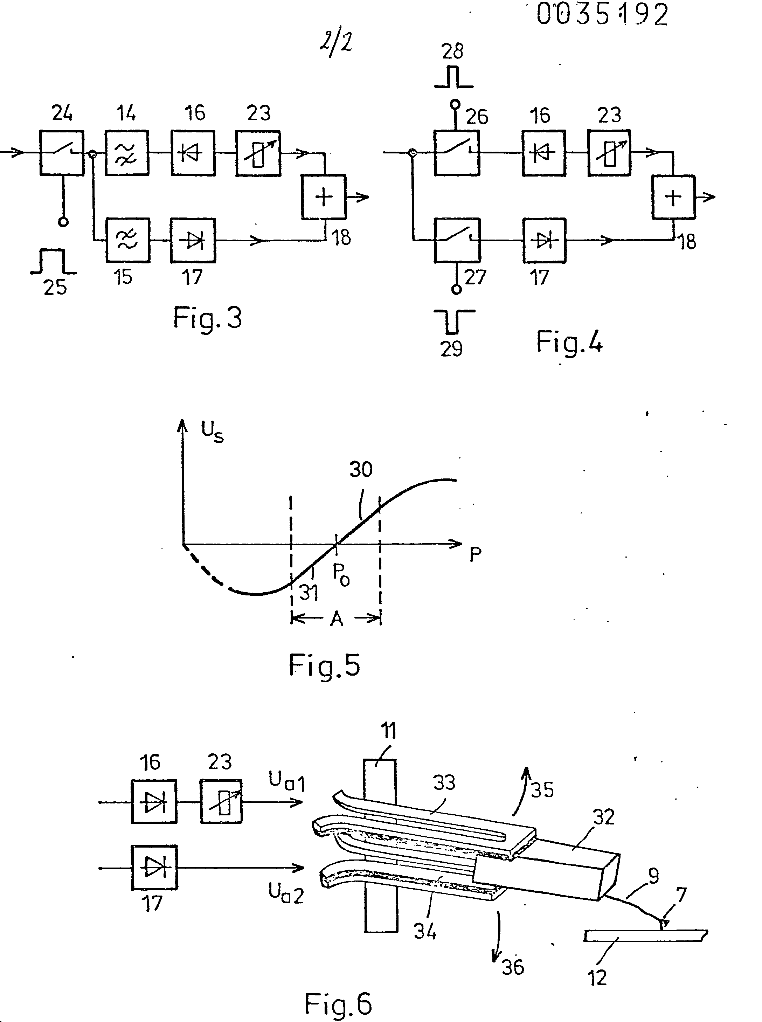

In Figur 4 ist angenommen, daß die beiden Signale mit den Frequenzen $f_1$ und $f_2$ nicht gleichzeitig, sondern zu definierten Zeitpunkten abwechselnd auftreten. Deshalb erfolgt hier eine zeitselektive Trennung mit den Toren 26,27, die zeitlich abwechselnd während des Auftretens der jeweiligen Signale durch die Impulse 28,29 durchlässig gesteuert sind. Es ist dann das Tor 26 dann durchlässig, wenn das Signal mit der Frequenz $f_1$ erscheint, und das Tor 27 dann durchlässig, wenn das Signal mit der Frequenz $f_2$ erscheint. Die Signale können aus aufeinanderfolgenden Paketen mit mehreren Schwingungen der Frequenz $f_1$ oder $f_2$ bestehen.

Figur 5 zeigt die bereits beschriebene Kennlinie für die Stellgröße $U_s$ für den Arbeitsbereich A in Figur 1. Der Kennlinienteil 30 gilt für den Bereich 5 und der Kennlinienteil 31 für den Bereich 4 in Figur 1.

In Figur 6 erfolgt die Regelung der Auflagekraft P mit Bimetallstreifen. Der Abtaster 7 ist über das Röhrchen 9 an dem Teil 32 befestigt, das zwischen den beiden Bimetallstreifen 33,34 eingespannt ist. Am anderen Ende sind die Bimetallstreifen fest in dem Abtastergehäuse 11 eingespannt. Die durch Gleichrichtung der Signale gewonnenen Spannungen $U_{a1}$ und $U_{a2}$ werden getrennt den beiden Bimetallstreifen 33 und 34 zugeführt und bewirken dort eine Gegentaktsteuerung im Sinne einer Regelung der Auflagekraft in der beschriebenen Weise. Es sei angenommen, daß beide Bimetallstreifen bei Erwärmung in Richtung der Pfeile 35,36 ausgelenkt werden. Dadurch ergibt sich zunächst eine Stabilisierung gegen Temperaturänderungen unabhängig von der elektrischen Steuerung. Bei Temperaturerhöhung weichung der Auflagekraft P vom Optimalwert $P_0$ zunimmt und zwar mit sinkender Auflagekraft P negativ und mit steigender Auflagekraft P positiv wird. Diese Stellgröße steuert den Elektromotor 19, der über das Ritzel 20 und das Zahnrad 21 die Höhenlage des Abtastergehäuses 11 verstellen kann. Die Grundeinstellung der Auflagekraft kann von Hand mit dem Einstellknopf 22 erfolgen.

Die Regelwirkung ist folgende. Es sei angenommen, daß zunächst die Auflagekraft ihren Optimalwert $P_0$ hat, $U_s = 0$ ist und somit der Motor 19 stillsteht. Wenn jetzt durch einen nicht völlig ebenen Aufzeichnungsträger 12 die Oberfläche des Aufzeichnungsträgers ihre Höhenlage nach oben ändert, wird das Röhrchen 9 weiter entgegen seiner Federwirkung ausgelenkt und somit die Auflagekraft P zunächst erhöht. Das bedeutet in Figur 1 eine Abweichung vom Werte $P_0$ nach rechts, so daß jetzt $U_{a2} > U_{a1}$ und die Stellgröße $U_s$ positiv wird. Die Stellgröße $U_s$ wirkt jetzt so auf den Motor ein, daß die Höhenlage des Abtastergehäuses 11 nach oben verändert, die Auslenkung des Röhrchens 9 und somit die Auflagekraft P wieder verringert wird. Dies erfolgt so lange, bis im Rahmen der wirksamen Regelsteilheit $P = P_0$ und $U_{a1} = U_{a2}$ und somit die optimale Auflagekraft $P_0$ wieder eingestellt ist.

Mit dem Amplitudeneinsteller 23 läßt sich die Amplitude von $U_{a1}$, d.h. die Kennlinie 1 in Figur 1 gegenüber der Kennlinie 2 einstellen. Diese Einstellung kann so erfolgen, daß der Schnittpunkt der beiden Kennlinien 1,2 und das Maximum der Kennlinie 1 in erwünschter Weise zusammenfallen.

In Figur 3 ist angenommen, daß die beiden Signale mit den Frequenzen $f_1$ und $f_2$ nur zu bestimmten Zeiten im abgetasteten Signal auftreten. Daher ist vor den Filtern 14,15 das Tor 24 vorgesehen, das nur während des Auftretens der gewünschten Signale durch den Schaltimpuls 25 durchlässig gesteuert ist.

Patentansprüche

1. Abspielgerät für einen plattenförmigen Aufzeichnungsträger mit Konstanthaltung der Auflagekraft des Abtasters, bei
dem der Abtaster an einem federnden Tragarm und dieser an
einem radial zur Platte bewegten Abtastergehäuse befestigt
ist, dadurch gekennzeichnet, daß die Amplitudendifferenz
($U_{a2}$ - $U_{a1}$) zwischen zwei vom Aufzeichnungsträger (12) abgetasteten Signalen mit konstanten, aber verschiedenen
Frequenzen ($f_1$,$f_2$) zur Steuerung der Auflagekraft (P) ausgenutzt ist.

2. Gerät nach Anspruch 1, dadurch gekennzeichnet, daß die
beiden Signale mit zwei verschiedenen Frequenzen aus dem
Frequenzspektrum eines binären PCM-Signales abgeleitet sind.

3. Gerät nach Anspruch 1, dadurch gekennzeichnet, daß die
beiden Signale zwei aufgezeichnete Pilotträger verschiedener Frequenz sind.

4. Gerät nach Anspruch 1, dadurch gekennzeichnet, daß die
beiden Signale durch frequenzselektive Filter (14,15) getrennt werden (Fig. 2,3).

5. Gerät nach Anspruch 1, dadurch gekennzeichnet, daß die
beiden Signale durch Tore (26,27) zeitselektiv getrennt
werden (Fig. 4).

6. Gerät nach Anspruch 1, dadurch gekennzeichnet, daß die
Differenzspannung ($U_{a2}$ - $U_{a1}$) aus den durch Amplitudenmodulation der Signale gewonnenen Spannungen ($U_{a1}$,$U_{a2}$) als
Stellgröße ($U_a$) auf ein elektromechanisches Stellglied
(19;33,34) einwirkt, das die Höhenlage des Abtastergehäuses (11,32) relativ zur Oberfläche des Aufzeichnungs-- 2 - trägers (12) ändert.

7. Gerät nach Anspruch 6, dadurch gekennzeichnet, daß das Stellglied ein Elektromotor (19) ist.

8. Gerät nach Anspruch 6, dadurch gekennzeichnet, daß das Stellglied ein Bimetallstreifen (33,34) oder ein Keramik-Biegeschwinger ist.

9. Gerät nach Anspruch 1, dadurch gekennzeichnet, daß ein den Tragarm (9) tragendes Teil (32) oben und unten symmetrisch von zwei Bimetallstreifen (33,34) oder Keramik-Biegeschwingern eingefaßt ist (Fig. 6).

10. Gerät nach Anspruch 9, dadurch gekennzeichnet, daß die durch Amplitudenmodulation der Signale gewonnenen Spannungen ($U_{a1}$, $U_{a2}$) getrennt an die beiden Bimetallstreifen (33,34) oder Keramik-Biegeschwinger angelegt sind (Fig. 6).

11. Gerät nach Anspruch 1, dadurch gekennzeichnet, daß Mittel (23) zur Einstellung des Amplitudenverhältnisses der aus den Signalen gewonnenen Spannung ($U_{a1}$, $U_{a2}$) vorgesehen sind.

12. Gerät nach Anspruch 1, dadurch gekennzeichnet, daß die aus der Amplitudendifferenz ($U_{a2} - U_{a1}$) gewonnenen Stellgröße ($U_s$) auf den Abtaster (7) einwirkt.

Fig.1

$U_S = U_{a2} - U_{a1}$

Fig.2

2/2

0035192

Fig.3

Fig.4

Fig.5

Fig.6

Europäisches
Patentamt

**EUROPÄISCHER RECHERCHENBERICHT**

0035192

EP 81 10 1217

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| PA | <u>DE - A - 2 916 300</u> (REDLICH et al.)<br>* Insgesamt *<br><br>-- | 1,6,7 | G 11 B 3/12 |
| A | <u>US - A - 4 102 536</u> (CLUNIS)<br>* Spalte 6, Zeile 48 - Spalte 7, Zeile 24; Spalte 9, Zeile 31 - Spalte 10, Zeile 36; Figuren 1,3 *<br><br>-- | 1 | |
| A | <u>DE - A - 2 749 617</u> (KUHN)<br>* Seite 7, Zeile 14 - Seite 8, Zeile 17; Figur 1 *<br><br>-- | 1 | RECHERCHIERTE SACHGEBIETE (Int Cl )<br><br>G 11 B 3/08<br>3/12<br>3/38 |
| A | <u>US - A - 3 830 505</u> (RABINOW)<br>* Spalte 2, Zeile 11 - Spalte 3, Zeile 65; Figuren 1,6 *<br><br>-- | 1 | |
| DA | <u>DE - A - 2 055 204</u> (REHBERG)<br>* Insgesamt *<br><br>---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-05-1981 | SANDRI |

EPA form 1503.1 06.78